# EUROPÄISCHE PATENTSCHRIFT

(11) **EP 4 574 490 B1**
(45) Veröffentlichungstag und Bekanntmachung des Hinweises auf die Patenterteilung: **01.10.2025**
(21) Anmeldenummer: 23219240.1
(22) Anmeldetag: 21.12.2023
(51) Int. Cl.: B60K 1/04, B62D 21/15, B62D 25/20

(54) **BATTERIETRÄGERANORDNUNG MIT RAMPENBLECH**
BATTERY HOLDER ASSEMBLY WITH RAMP PLATE
ENSEMBLE SUPPORT DE BATTERIE AVEC PLAQUE DE RAMPE

(43) Veröffentlichungstag der Anmeldung: 25.06.2025
(73) Patentinhaber: Benteler Automobiltechnik GmbH, 33102 Paderborn (DE)
(72) Erfinder: Stastny, Peter Michael, 33129 Delbrück (DE); Hitz, Andreas, 59597 Erwitte (DE)
(74) Vertreter: Osterhoff, Utz

(56) Entgegenhaltungen:
- DE-B3- 102022 126 585
- US-A1- 2017 120 951
- US-A1- 2022 379 963

## Beschreibung

Die vorliegende Erfindung betrifft eine Batterieträgeranordnung eines Elektrokraftfahrzeuges gemäß den Merkmalen des Anspruchs 1.

Aus dem Stand der Technik sind seit vielen Jahrzehnten Personenkraftwagen bekannt, die mittels eines verbrennungsmotorischen Antriebes die Möglichkeit geben, um Personen und leichte Lasten von einem Ort zum nächsten zu verbringen.

In den letzten Jahren hat sich der Antrieb von einem verbrennungsmotorischen Antrieb mehr und mehr zu einem Elektroantrieb gewandelt. Ein Elektroantrieb benötigt eine Energiespeicherquelle, auch Antriebsbatterie genannt. Solche Antriebsbatterien müssen jedoch, damit ein Personenkraftwagen von bis zu 7,5 t inklusive Zuladung einen entsprechenden Energievorrat mit sich trägt, flächenmäßig groß gestaltet sein und wiegen bis zu mehreren 100 Kilogramm.

Hierzu sind zumeist die Batterien bzw. Speicherzellen in einem sogenannten Batterieträger, auch als battery tray bezeichnet, untergebracht. Es bietet sich an, einen solchen Batterieträger im Unterflurbereich, mithin unterhalb des Fahrgastraumes anzuordnen. Somit hat das Elektrokraftfahrzeug gleichsam einen niedrigen Schwerpunkt, was sich positiv auf das Fahrverhalten gerade in Kurvenfahrten auswirkt.

Im Falle eines Fahrzeugcrashes gilt es dabei den Batterieträger möglichst zu schützen, damit die darin aufgenommenen Speicherzellen keinen mechanischen Schaden erleiden. Zum einen bestünde im Zweifel die Gefahr einer Brandentwicklung, zum anderen ist die Erneuerung der Speicherzellen mit erheblichem finanziellen Aufwand verbunden.

Aus der DE 10 2022 126585 B3 ist eine vordere Schutzkappe bekannt, die zwischen einem Batterieträger und einer Vorderachse oberhalb einer Trennebene angeordnet ist.

Aus US 2022/379963 A1 ist ferner eine Batterieträgeranordnung bekannt, die über Stützstreben an einer Vorderachse abgestützt ist.

Die Aufgabe der vorliegenden Erfindung ist es daher, eine Möglichkeit aufzuzeigen, dass in bestimmten Fahrsituationen, insbesondere bei einem Fahrzeugcrash eine Beschädigung eines Batterieträgers möglichst vermieden wird.

Die zuvor genannte Aufgabe wird erfindungsgemäß bei einer Batterieträgeranordnung eines Elektrokraftfahrzeuges mit den Merkmalen im Anspruch 1 gelöst.

Vorteilhafte Ausgestaltungsvarianten sind in den abhängigen Ansprüchen beschrieben.

Die Batterieträgeranordnung ist für ein Elektrokraftfahrzeug vorgesehen. Das Elektrokraftfahrzeug weist dazu einen Batterieträger auf, welcher im Unterflurbereich des Elektrokraftfahrzeugs angeordnet ist. Der Batterieträger ist ein Batteriekasten, welcher insbesondere sich in Kraftfahrzeugquerrichtung über mehr als 50 %, insbesondere mehr als 60 %, bevorzugt mehr als 70 % der Kraftfahrzeugbreite erstreckt. Der Batterieträger weist bevorzugt ein im Wesentlichen in Kraftfahrzeugquerrichtung verlaufende Front auf. Der Batterieträger ist im Unterflurbereich des Elektrokraftfahrzeuges angeordnet.

Ferner weist die Batterieträgeranordnung einen Vorderachsträger, der auch als Motorachsträger bezeichnet werden kann, auf. Der Vorderachsträger ist insbesondere als Rahmenbauteil ausgebildet und nimmt Komponenten der Vorderachse auf, um somit die Vorderachse unterhalb der Karosserie des Elektrokraftfahrzeuges zu befestigen bzw. anzuordnen.

Erfindungsgemäß zeichnet sich die Batterieträgeranordnung dadurch aus, dass in einem Übergangsbereich von dem Vorderachsträger zu dem Batterieträger ein in Kraftfahrzeuglängsrichtung sich erstreckendes bzw. verlaufendes einschaliges Rampenblech angeordnet ist. Das Rampenblech ist weiterhin erfindungsgemäß als Warmumform- und Presshärtebauteil mit einer Zugfestigkeit Rm größer 1200 MPa ausgebildet.

Das erfindungsgemäße Rampenblech übernimmt dabei zwei Funktionen. Im Falle eines Frontalcrashs verstärkt es den Bereich, ist insbesondere mit dem Vorderachsträger und dem Batterieträger gekoppelt. Es verhindert somit eine Intrusion des Vorderachsträgers in den Batterieträger. Das Rampenblech erfüllt einen zweiten Zweck, im Falle des Aufpralls auf ein Bodenhindernis bzw. des Überfahrens eines Bodenhindernisses verhindert das Rampenblech, dass das Bodenhindernis frontal in den Batterieträger eindringt und diesen beschädigt. Das Rampenblech ermöglicht ein Abgleiten bzw. Ableiten des Bodenhindernisses unterhalb des Batterieträgers, so dass ein weitergehender Schaden vermieden wird.

Das Rampenblech ist insbesondere mit dem Vorderachsträger und/oder mit dem Batterieträger gekoppelt, insbesondere verschraubt. Dies ermöglicht eine einfache Montage des Rampenbleches. Dadurch, dass die Warmumform- und Presshärtetechnologie zum Einsatz kommt und somit ein Bauteil aus hochfestem, insbesondere ultrahochfestem Stahl bereitgestellt wird, kann das Rampenblech als einschaliges Blechbauteil ausgebildet werden. Dies spart insbesondere Gewicht und Produktionskosten im Vergleich zu anderen Bauteilen, die mit deutlich mehr Materialaufwand und/oder deutlich mehr Materialeinsatz und/oder erhöhtem Produktionsaufwand hergestellt würden.

Das Rampenblech selbst ist bevorzugt aus einer einstückigen, werkstoffeinheitlichen Blechplatine hergestellt. Alternativ kann das Rampenblech aus einem Tailor Welded Blank, mithin einer Blechplatine, die aus mehreren unterschiedlichen Blechen mit verschiedenen Blechdicken und/oder Blechwerkstoffqualitäten zusammengeschweißt ist, hergestellt sein.

Das Rampenblech weist eine zu der Kraftfahrzeuglängsrichtung schräg verlaufende Rampenfläche auf, die sich selbst wiederum bevorzugt über einen Großteil der Breite des Batterieträgers erstreckt. Insbesondere deckt die Rampenfläche den gesamten vorderen, sich in Kraftfahrzeugquerrichtung erstreckenden Bereich des Batterieträgers ab.

Bevorzugt ist die Rampenfläche in einem Winkel von 3° bis 20° zu einer horizontalen bzw. zu der Kraftfahrzeuglängsrichtung angeordnet. Hierdurch können dann Bodenhindernisse nach unten unterhalb des Batterieträgers mit der Rampenfläche abgeleitet werden.

Weiterhin sind besonders bevorzugt Koppelbereiche ausgebildet. Insbesondere betrifft dies Ausnehmungen in dem Rampenblech. Diese können besonders bevorzugt eine geringere Festigkeit als das restliche Rampenblech aufweisen. Hierdurch wird die Duktilität gesteigert. Im Falle eines Unfalls können diese Bereiche somit nicht abreißen. Die restlichen Bereiche mit hoher Zugfestigkeit des Rampenbleches erfüllen jedoch eine entsprechende Aussteifung im Falle eines Unfalls.

Eine vordere Koppelfläche und/oder eine hintere Koppelfläche sind im Wesentlichen parallel zur Kraftfahrzeuglängsrichtung bzw. einer durch die Kraftfahrzeuglängsrichtung und Kraftfahrzeugquerrichtung aufgespannten Ebene orientiert, verlaufend angeordnet. Hierdurch ist es möglich, dann das Rampenblech zu befestigen unterhalb des Vorderachsträgers und unterhalb des Batterieträgers. Die dazwischen verlaufende Rampenfläche verläuft dann schräg nach unten abfallend. Die vordere Fläche unterhalb des Vorderachsträgers und/oder die hintere Fläche unterhalb des Batterieträgers ist in Draufsicht jeweils als Rechteck ausgebildet. Die Erstreckung in Kraftfahrzeuglängsrichtung ist deutlich kürzer als die Erstreckung in Kraftfahrzeugquerrichtung. Die Erstreckung in Kraftfahrzeugquerrichtung entspricht bevorzugt der Breite des Batterieträgers. Dies entspricht wiederum einem Großteil der Breite des Kraftfahrzeuges selber.

Es können weiterhin in Kraftfahrzeuglängsrichtung, zumindest längenabschnittsweise, Verstärkungssicken eingeformt sein. Innerhalb der Verstärkungssicken 11 oder vorzugsweise in flachen Blechbereichen zwischen den Sicken, können wiederum Koppelflächen für die Vorderachsträger-Befestigung und/oder zuvor erwähnte Abstandhalter vorgesehen sein. Diese sind dann insbesondere im Rampenbereich bzw. der Rampenfläche des Rampenbleches eingeformt. Die Rampenfläche ist somit nochmals mehr ausgesteift und ermöglicht, dass Bodenhindernisse nach unten unterhalb des Kraftfahrzeuges abgleiten.

Alternativ oder ergänzend können Verstärkungspatches auf dem Rampenblech angeordnet sein. Diese werden dann, auf der der Untergrund abgewandten Seite, mithin einer Innenseite des Rampenbleches, angeordnet und vorzugsweise gemeinsam mit zum Rampenblech warmumgeformt und pressgehärtet.

Es hat sich weiterhin als besonders vorteilhaft herausgestellt, wenn das Rampenblech sich in Kraftfahrzeuglängsrichtung mindestens bis zum Hälfte unter den Vorderachsträger erstreckt.

Zur weiteren Aussteifung können zwischen einer Innenseite des Rampenbleches und dem Vorderachsträger unter dem Batterieträger weitere Abstandhalter angeordnet sein. Auch dies sorgt für eine zusätzliche Versteifung des Rampenbleches.

Ein weiterer Aspekt der Erfindung sieht vor, dass in dem Rampenblech in Kraftfahrzeuglängsrichtung vor dem Batterieträger ein Pufferelement angeordnet ist. Das Pufferelement funktioniert nach dem Prinzip einer Crashbox bzw. eines Anschlages. Im Falle eines Unterflurfrontalcrashs, mithin eines Frontalcrashs, der eine in Kraftfahrzeuglängsrichtung Vorderseite des Batterieträgers betreffen würde, nach dem Funktionsprinzip einer Crashbox Energie abgebaut wird. Hierzu kann beispielsweise ein Hohlprofil vor dem Batterieträger an der Innenseite des Rampenbleches zusätzlich angeordnet sein. Das Hohlprofil kann gleichzeitig als Abstandhalter und Versteifungselement dienen. Ist die Crashenergie jedoch so groß, dass das Rampenblech selbst verformt wird, dient das Hohlprofil als Crashbox und schützt eine Vorderseite des Batterieträgers.

Das Pufferelement kann auch als Anschlag ausgebildet sein. Dies unterstützt somit die Verschraubung des Rampenbleches an dem Batterieträger im Falle eines Frontalaufpralls bzw. Frontalcrashs. Die Kraft, welche in Kraftfahrzeuglängsrichtung wirkt, würde ansonsten zu hohen Belastungen führen, gegebenenfalls zu einem Abreißen des Rampenbleches. Durch das Pufferelement ist somit ein Anschlag gegeben, dergestalt, dass das Rampenelement nicht unterhalb des Batterieträgers gedrückt würde.

Eine erfindungsgemäße Batterieträgeranordnung wirkt besonders in Verbindung mit einem ausreichend durchschlaggeschützten Batterieträger mit integrierter oder montierten Unterfahrschutz synergetisch zusammen, wobei das Hindernis nach dem Rampenblech unter dem Batterieträger bzw. dessen Unterfahrschutz weiter entlanggleiten kann.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1: eine erfindungsgemäße Batterieträgeranordnung schematisch vereinfacht;
- Figur 2: eine Ansicht von unten auf die erfindungsgemäße Batterieträgeranordnung;
- Figur 3a und b: eine Seitenansicht sowie eine Ansicht von unten auf ein modifiziertes Rampenblech;
- Figur 4a und b: eine alternative Ausgestaltungsvariante des Rampenblechs;
- Figur 5a und b: ein eine Alternative mit Verstärkungspatch;
- Figur 6: eine alternative Ausgestaltungsvariante;
- Figur 7a, b und c: eine alternative Ausgestaltungsvariante gemäß Figur 1;
- Figur 8: eine weitere Ausgestaltungsvariante mit Pufferelement;
- Figur 9a, b und c: verschiedene Pufferelemente und
- Figur 10: eine alternative Anordnung zu Figur 1.

In den Figuren werden für gleiche oder ähnliche Bauteile dieselben Bezugszeichen verwendet, auch wenn eine wiederholte Beschreibung aus Vereinfachungsgründen entfällt.

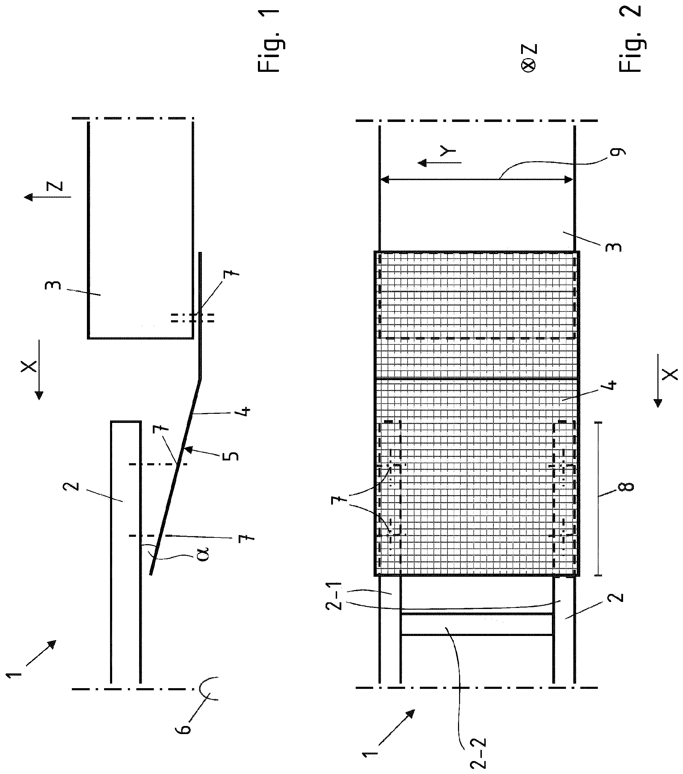

Figur 1 zeigt eine erfindungsgemäße Batterieträgeranordnung 1 schematisch vereinfach in einer Seitenansicht. Ein Vorderachsträger 2 ist dargestellt, aufweisend Querträger 2-2 sowie zwei Längsträger 2-1 sowie ein auf die Kraftfahrzeuglängsrichtung X dahinter angeordneter Batterieträger 3. Bezogen auf die Kraftfahrzeugvertikalrichtung Z ist unterhalb des Batterieträgers 3 und unterhalb des Vorderachsträgers erfindungsgemäß ein Rampenblech 4 angeordnet und das Rampenblech 4 weist dazu eine schräg verlaufende Rampenfläche 5 auf. Die Rampenfläche 5 liegt in einem Winkel α zur Kraftfahrzeuglängsrichtung X. Ein nicht näher dargestellter von vorne kommender Poller oder Gegenstand wird somit durch die schräg verlaufende Rampenfläche 5 unterhalb des Batterieträgers 3 abgeleitet bzw. das Fahrzeug wird entsprechend nach oben durch die Rampenfläche angehoben. Eine Beschädigung des Batterieträgers 3 wird somit effektiv vermieden. Es können beispielsweise Verschraubungen am vorderachsträger, jedoch auch am Batterieträger 3, vorhanden sein, mindestens jedoch über einen durch die Batteriezellen bzw. Batteriepacks belegte Belegungsbreite

Ebenso sind die Koppelflächen zur vorzugsweise kraftschlüssigen und lösbaren Befestigung des Rampenblechs am Vorderachsträger angedeutet, und zwar hier beispielhaft an den in Fahrzeuglängsrichtung verlaufenden Längsträgern des Vorderachsträgers.

Figur 2 zeigt eine Ansicht von unten auf die erfindungsgemäße Batterieträgeranordnung 1. In Kraftfahrzeuglängsrichtung X erstreckt sich das Rampenblech 4 dabei mindestens über die Hälfte des Vorderachsträgers 2. Auf die Kraftfahrzeugquerrichtung Y bezogen erstreckt sich das Rampenblech 4 bevorzugt über die gesamte Breite des Batterieträgers 3.

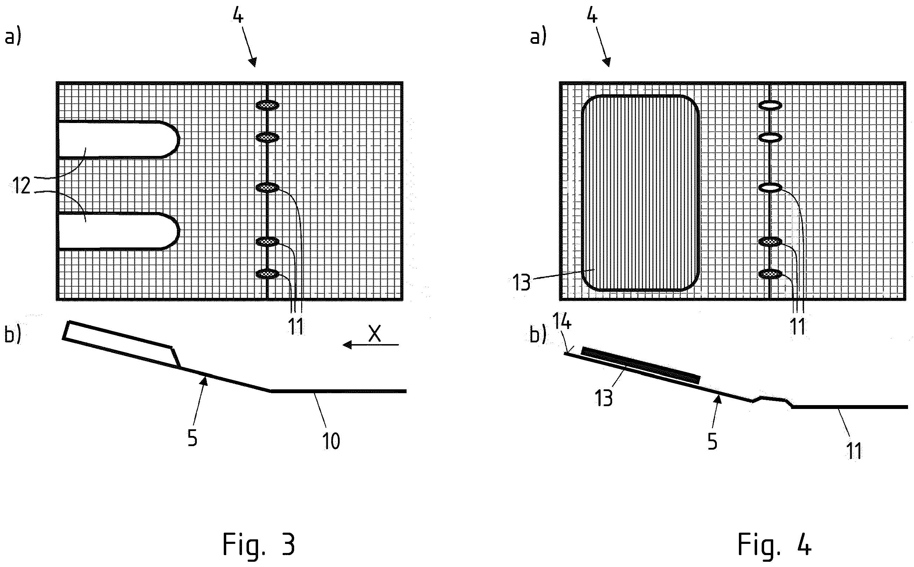

Figuren 3a und b zeigen eine Seitenansicht sowie eine Ansicht von unten auf ein modifiziertes Rampenblech 4. Das Rampenblech 4 weist eine vordere Rampenfläche 5 auf sowie eine hintere Koppelfläche 10 auf. Die Koppelfläche 10 liegt zumindest teilweise unterhalb eines nicht näher dargestellten Batterieträgers 3 an und verläuft im Wesentlichen parallel zu einer Horizontalen bzw. der Kraftfahrzeuglängsrichtung X. Am Übergang von Koppelbereich zu Rampenfläche 5 sind einzelne Verstärkungssicken 11 angeordnet. Ferner sind im vorderen Bereich größere Verstärkungssicken 11 angeordnet, die sich zumindest längenabschnittsweise in Kraftfahrzeuglängsrichtung X über die Rampenfläche 5 erstrecken.

Figuren 4a und b zeigen eine alternative Ausgestaltungsvariante des Rampenblechs 4. Hierbei ist ein Verstärkungspatch 13 auf eine Innenseite 14 des Rampenbleches 4, insbesondere in der Rampenfläche 5, angeordnet. Ferner wiederum Verstärkungssicken 11 im Übergangsbereich zwischen Rampenfläche 5 und Koppelfläche 10.

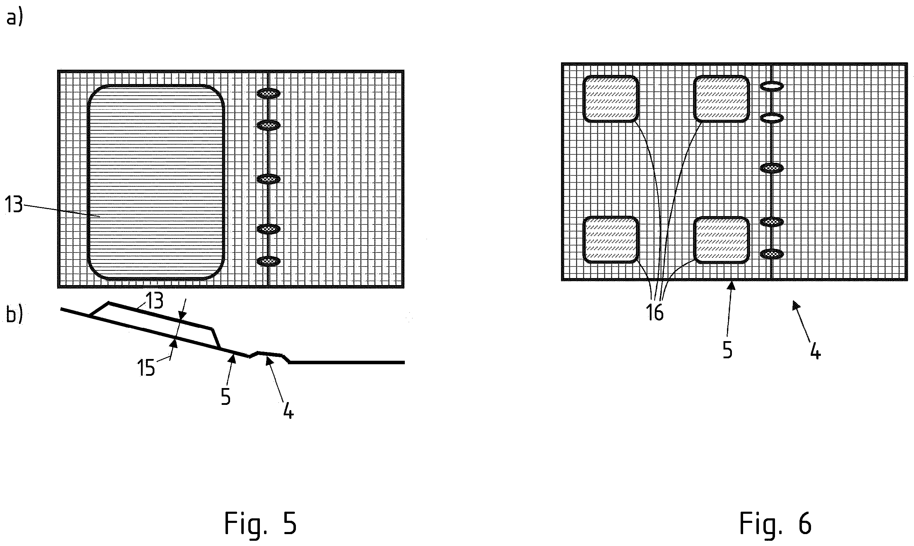

Figuren 5a und b ist ebenfalls ein Verstärkungspatch 13 angeordnet. Dieses Verstärkungspatch 13 ist jedoch in einem Abstand 15 zu der Rampenfläche 5 des Rampenbleches 4 unter Ausbildung eines oder mehrerer aussteifender Hohlräume angeordnet. Das Verstärkungspatch 13 kann somit ebenfalls nach dem Prinzip einer Crashbox fungieren, so dass zur Ableitung eines Gegenstandes eine Verstärkung 7 gegeben ist. Ist der Aufprall jedoch derart hoher Intensität, dass ein Intrudieren zu befürchten wäre, würde das Verstärkungspatz 13 das Rampenblech 4 verstärken.

Figur 6 zeigt eine alternative Ausgestaltungsvariante. Hierbei sind vier sogenannte Softzones 16 im Rampenbereich angeordnet. Die Softzones sind Bereiche mit geringerer Zugfestigkeit Rm und dienen dem Energieabbau und/oder der Rissprävention in Koppelflächen.

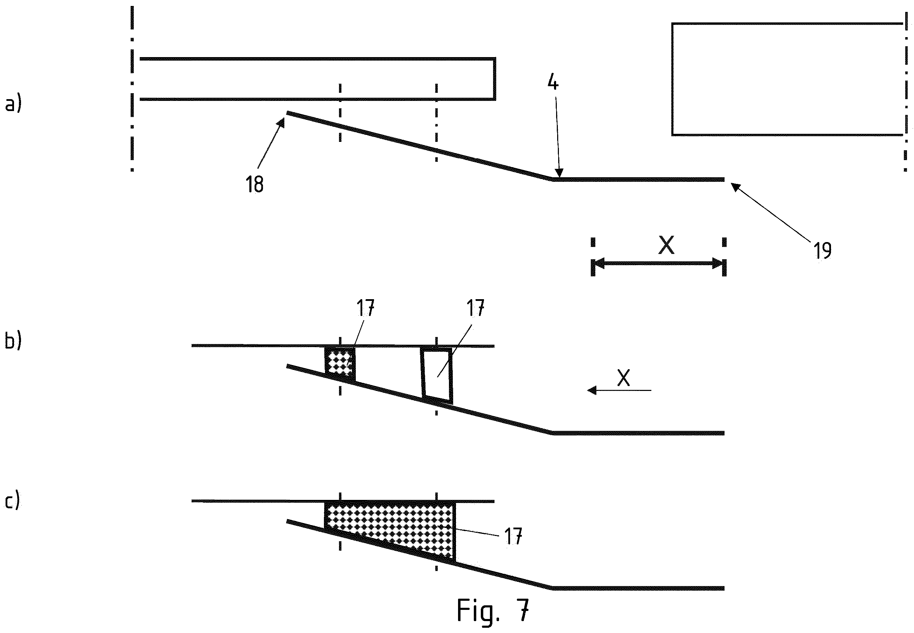

Figuren 7a, b und c zeigen eine Ausgestaltungsvariante gemäß Figur 1. Hier ist jedoch gemäß Figur 7b bzw. Figur 7c jeweils ein Abstandhalter 17 angeordnet. Gemäß dem Abstandhalter 17 in Figur 7b sind zwei einzelne Abstandhalter 17 in Kraftfahrzeuglängsrichtung X hintereinander angeordnet. Nicht näher dargestellt, jedoch auf die Kraftfahrzeugquerrichtung bezogen, ist dann im Bereich der linken Fahrzeugseite und im Bereich der rechten Fahrzeugseite jeweils eine solche Anordnung mit Abstandhaltern vorgesehen. Gemäß Figur 7c ist ein Abstandhalterblock vorgesehen. Auf die linke und rechte Fahrzeugseite in Kraftfahrzeugquerrichtung Y wiederum bezogen, kann somit links- und rechtsseitig jeweils ein Abstandhalterblock angeordnet sein. Ferner können, bezogen auf alle Varianten jeweils eine vordere Längskante 18 bzw. eine hintere Längskante 19 ausgebildet sein. Die Längskanten 18, 19 erstrecken sich jeweils bevorzugt über die gesamte Breite des Rampenblechs 4.

Anstelle der lokalen Anordnung der Abstandshalter wäre auch möglich, diese durchgängig in Fahrzeugquerrichtung von einer linken Koppelfläche bis zu einer rechten Koppelfläche, mithin zwischen den beiden Vorderachs-Längsträgern 2-1 gemäß Figur 2 verlaufend auszubilden.

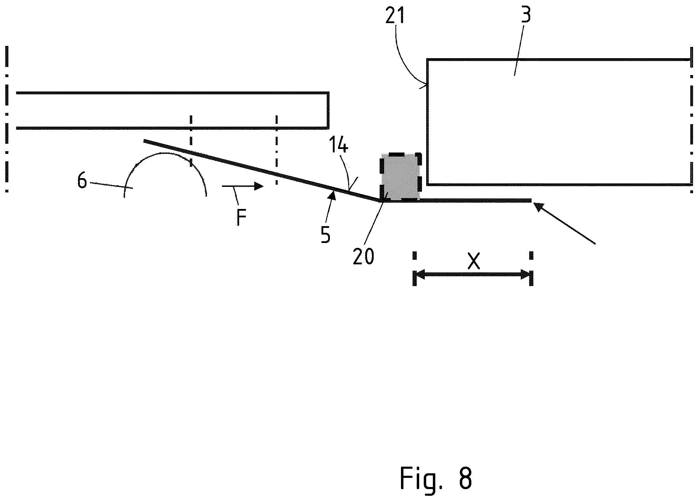

Figur 8 zeigt eine weitere Ausgestaltungsvariante. Hierbei wird ein Pufferelement 20 angeordnet. Das Pufferelement 20 kann beispielsweise ein Hohlprofil sein. Trifft somit ein Gegenstand auf, wird hier in Kraftrichtung f auf das Rampenblech 4 bzw. die Rampenfläche 5 des Rampenbleches 4 eingewirkt. Ist die Intensität so hoch, würde dieser Gegenstand 6 an eine Vorderseite 21 des Batterieträgers 3 prallen und diesen im Zweifel beschädigen. Hier ist dann das Pufferelement 20 angeordnet und fungiert nach dem Prinzip einer Crashbox.

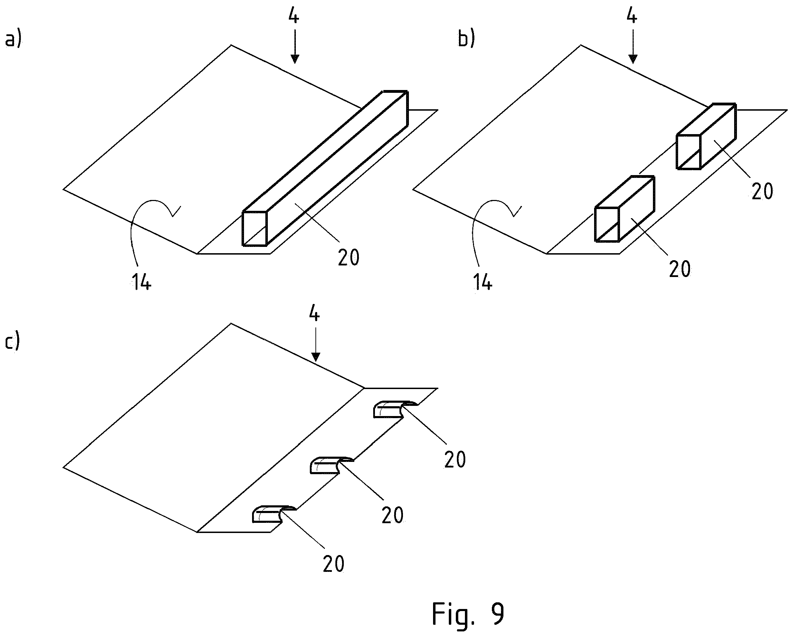

Verschiedene Pufferelemente 20 sind in Figur 9a, b und c dargestellt. Es kann sich demnach um separat ausgebildete Hohlprofile handeln, die an einer Innenseite 14 des Rampenblechs 4 angeordnet werden. Die Pufferelemente 20 deformieren dann bei einem Aufprall hoher Intensität zwischen dem Gegenstand und der Vorderseite 21 des Batterieträgers 3 und schützen somit den Batterieträger 3 im Falle des Nichtableitens. Ferner halten die Pufferelemente 20 das Rampenblech 4 in Position vor dem Batterieträger 3.

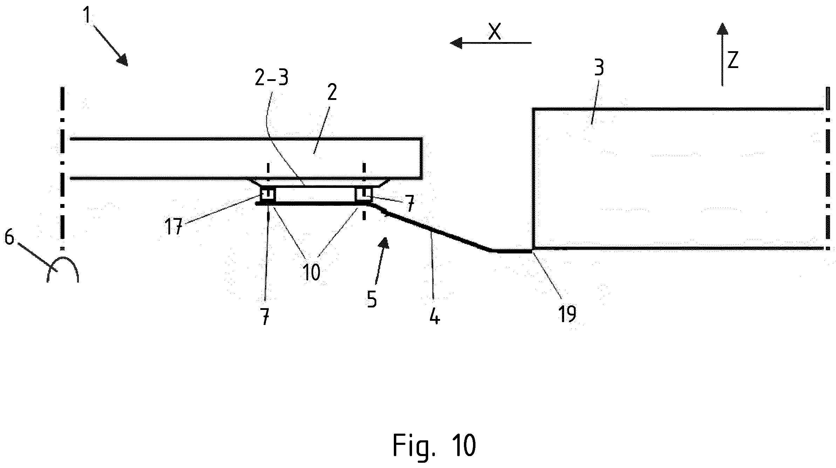

Figur 10 zeigt eine alternative Ausgestaltungsform der Erfindung. Erkennbar ist, dass sich eine vordere und eine hintere Koppelfläche 10 des Rampenblechs 4 zum Vorderachsträger 2 und zur Fahrzeuglängsachse parallel erstrecken.

Über angedeutete Hülsen, ausgehend von der Koppelfläche 10, ist das Rampenblech 4 mit dem Vorderachsträger 2 verbunden. Auch der Vorderachsträger 2 kann eine ausgeformte Koppelfläche 2-3 aufweisen, welche an die Form und Lage der Hülsen angepasst ist oder einen Abstand zum Rampenblech 4 reduziert.

Weiterhin ist das Rampenblech in diesem Beispiel mit seiner hinteren Längskante 19 in Fahrzeughochrichtung bündig mit dem Batterieträger 3 ausgebildet. Dabei bezieht es sich bündig auf den unteren Teil bzw. auf den Boden oder Unterfahrzeug des Batterieträgers. In Fahrzeughochrichtung evtl. höherliegende Bereiche des Batterieträgers, wie ein seitlicher Crashrahmen, können vom Rampenblech dabei wiederum untergriffen werden, was in der sehr schematischen rechteckigen Form der Figur 10 nicht gezeigt ist.

### Bezugszeichen:

- 1 -: Batterieträgeranordnung
- 2 -: Vorderachsträger
- 3 -: Batterieträger
- 4 -: Rampenblech
- 5 -: Rampenfläche
- 6 -: Gegenstand
- 7 -: Verschraubung
- 8 -: Hälfte zu 2
- 9 -: Breite zu 3
- 10 -: Koppelfläche
- 11 -: Verstärkungssicke
- 12 -: größere Verstärkungssicke
- 13 -: Verstärkungspatch
- 14 -: Innenseite zu 4
- 15 -: Abstand
- 16 -: Softzone
- 17 -: Abstandhalter
- 18 -: vordere Längskante
- 19 -: hintere Längskante
- 20 -: Pufferelement
- 21 -: Vorderseite zu 3

- X -: Kraftfahrzeuglängsrichtung
- Y-: Kraftfahrzeugquerrichtung
- Z-: Kraftfahrzeugvertikalrichtung
- α: Winkel

## Patentansprüche

1. Batterieträgeranordnung (1) eines Elektrokraftfahrzeuges, aufweisend einen Batterieträger (3), welcher im Unterflurbereich des Elektrokraftfahrzeuges angeordnet ist und ein Vorderachsträger (2), **dadurch gekennzeichnet, dass** im Übergang von dem Vorderachsträger (2) zu dem Batterieträger (3) ein in Kraftfahrzeuglängsrichtung (X) verlaufendes einschaliges Rampenblech (4) als Warmumform- und Presshärtebauteil mit einer Zugfestigkeit Rm größer 1200 MPa angeordnet ist und dass das Rampenblech (4) eine schräg zu der Kraftfahrzeuglängsrichtung (X) verlaufende Rampenfläche (5) aufweist.

2. Batterieträgeranordnung (1) nach Anspruch 1, **dadurch gekennzeichnet, dass** das Rampenblech (4) Koppelbereich zur Anbindung an den Vorderachsträger (2) und/oder Batterieträger (3) aufweist, wobei der Koppelbereich bevorzugt eine geringere Festigkeit aufweisen.

3. Batterieträgeranordnung (1) nach Anspruch 1 oder 2, **dadurch gekennzeichnet, dass** das Rampenblech (4) in Kraftfahrzeuglängsrichtung (X) eine vordere Längskante aufweist, zur Anbindung an den Vorderachsträger (2) und/oder dass das Rampenblech (4) in Kraftfahrzeuglängsrichtung (X) eine hintere Längskante aufweist, zur Anbindung an den Batterieträger (3), insbesondere ist das Rampenblech zumindest bündig mit dem Batterieträger in Kraftfahrzeuglängsrichtung gekoppelt, besonders bevorzugt untergreift das Rampenblech (4) den Batterieträger (3).

4. Batterieträgeranordnung (1) nach einem der vorhergehenden Ansprüche, **dadurch gekennzeichnet, dass** das Rampenblech (4) aus einer einstückigen und werkstoffeinheitlichen Blechplatine hergestellt ist oder dass das Rampenblech (4) aus einer Tailored Blank hergestellt ist.

5. Batterieträgeranordnung (1) nach einem der vorhergehenden Ansprüche, **dadurch gekennzeichnet, dass** das Rampenblech (4) eine zu der Kraftfahrzeuglängsrichtung (X) schräg verlaufende Fläche über einen Großteil der Breite (9) des Batterieträgers (3) aufweist, bevorzugt in einem Winkel von 3 bis 20 Grad.

6. Batterieträgeranordnung (1) nach einem der vorhergehenden Ansprüche, **dadurch gekennzeichnet, dass** eine vordere Koppelfläche (10) und/oder eine hintere Koppelfläche (10) im Wesentlichen parallel zur Kraftfahrzeuglängsrichtung (X) verlaufend orientiert sind.

7. Batterieträgeranordnung (1) nach einem der vorhergehenden Ansprüche, **dadurch gekennzeichnet, dass** in Kraftfahrzeuglängsrichtung (X) verlaufend mindestens eine Verstärkungssicke (11) längenabschnittsweise in dem Rampenblech (4) eingeformt ist.

8. Batterieträgeranordnung (1) nach einem der vorhergehenden Ansprüche, **dadurch gekennzeichnet, dass** mindestens ein Verstärkungspatch (13) angeordnet ist, vorzugsweise auf der dem Untergrund abgewandten Seite angeordnet ist, insbesondere gekoppelt ist.

9. Batterieträgeranordnung (1) nach einem der vorhergehenden Ansprüche, **dadurch gekennzeichnet, dass** sich das Rampenblech (4) in Kraftfahrzeuglängsrichtung (X) bis mindestens zur Hälfte unter den Vorderachsträger (2) erstreckt.

10. Batterieträgeranordnung (1) nach einem der vorhergehenden Ansprüche, **dadurch gekennzeichnet, dass** zwischen einer Innenseite des Rampenblechs (4) und dem Vorderachsträger (2) und/oder Batterieträger (3) Abstandhalter (17) angeordnet sind.

11. Batterieträgeranordnung (1) nach einem der vorhergehenden Ansprüche, **dadurch gekennzeichnet, dass** in Kraftfahrzeuglängsrichtung (X) vor dem Batterieträger (3) an der Innenseite (14) des Rampenbleches (4) ein Pufferelement (20) angeordnet ist.

## Claims

1. A battery holder assembly (1) of an electric motor vehicle, having a battery holder (3) which is arranged in the underfloor region of the electric motor vehicle and a front axle holder (2), **characterised in that**, in the transition from the front axle holder (2) to the battery holder (3), a single-shell ramp plate (4), running in the motor vehicle longitudinal direction (X), is arranged as a hot-forming and press-hardening component with a tensile strength Rm greater than 1200 MPa and **in that** the ramp plate (4) has a ramp surface (5) running obliquely to the motor vehicle longitudinal direction (X).

2. The battery holder assembly (1) according to claim 1, **characterised in that** the ramp plate (4) has coupling regions for connection to the front axle holder (2) and/or battery holder (3), wherein the coupling regions preferably have a lower strength.

3. The battery holder assembly (1) according to claim 1 or 2, **characterised in that** the ramp plate (4) has a front longitudinal edge in the motor vehicle longitudinal direction (X) for connection to the front axle holder (2) and/or **in that** the ramp plate (4) has a rear longitudinal edge in the motor vehicle longitudinal direction (X) for connection to the battery holder (3), in particular the ramp plate is coupled at least flush with the battery holder in the motor vehicle longitudinal direction, particularly preferably the ramp plate (4) engages underneath the battery holder (3).

4. The battery holder assembly (1) according to any one of the preceding claims, **characterised in that** the ramp plate (4) is made from a single-piece sheet metal blank of uniform material or **in that** the ramp plate (4) is made from a tailored blank.

5. The battery holder assembly (1) according to any one of the preceding claims, **characterised in that** the ramp plate (4) has a surface which runs obliquely to the motor vehicle longitudinal direction (X) over a large part of the width (9) of the battery holder (3), preferably at an angle of 3 to 20 degrees.

6. The battery holder assembly (1) according to any one of the preceding claims, **characterised in that** a front coupling surface (10) and/or a rear coupling surface (10) are oriented running substantially parallel to the motor vehicle longitudinal direction (X).

7. The battery holder assembly (1) according to any one of the preceding claims, **characterised in that** at least one reinforcement bead (11) is formed in lengthwise sections in the ramp plate (4) running in the motor vehicle longitudinal direction (X).

8. The battery holder assembly (1) according to any one of the preceding claims, **characterised in that** at least one reinforcement patch (13) is arranged, preferably arranged, in particular coupled, on the side facing away from the substrate.

9. The battery holder assembly (1) according to any one of the preceding claims, **characterised in that** the ramp plate (4) extends in the motor vehicle longitudinal direction (X) to at least halfway below the front axle holder (2).

10. The battery holder assembly (1) according to any one of the preceding claims, **characterised in that** spacers (17) are arranged between an inner side of the ramp plate (4) and the front axle holder (2) and/or battery holder (3).

11. The battery holder assembly (1) according to any one of the preceding claims, **characterised in that** a buffer element (20) is arranged in front of the battery holder (3) on the inner side (14) of the ramp plate (4) in the motor vehicle longitudinal direction (X).

## Revendications

1. Ensemble (1) de support de batterie d'un véhicule électrique à moteur, présentant un support de batterie (3) qui est disposé dans la zone sous-plancher du véhicule électrique à moteur et un support d'essieu avant (2), **caractérisé en ce qu'**au niveau du croisement entre le support d'essieu avant (2) et le support de batterie (3), une plaque de rampe (4) monocoque s'étendant dans la direction longitudinale (X) du véhicule est disposée en tant que composant formé à chaud et durci sous presse avec une résistance à la traction Rm supérieure à 1200 MPa et **en ce que** la plaque de rampe (4) présente une surface de rampe (5) s'étendant de manière inclinée par rapport à la direction longitudinale (X) du véhicule.

2. Ensemble (1) de support de batterie selon la revendication 1, **caractérisé en ce que** la plaque de rampe (4) présente une zone de couplage pour la liaison au support d'essieu avant (2) et/ou au support de batterie (3), dans lequel la zone de couplage présente de préférence une résistance inférieure.

3. Ensemble de support de batterie (1) selon la revendication 1 ou la revendication 2, **caractérisé en ce que** la plaque de rampe (4) présente un bord longitudinal avant dans la direction longitudinale (X) du véhicule, pour la liaison au support d'essieu avant (2) et/ou que la plaque de rampe (4) présente un bord longitudinal arrière dans la direction longitudinale (X) du véhicule, pour la liaison au support de batterie (3), en particulier la plaque de rampe est au moins couplée à fleur avec le support de batterie dans la direction longitudinale du véhicule, de manière particulièrement préférée la plaque de rampe (4) soutient le support de batterie (3).

4. Ensemble (1) de support de batterie selon l'une quelconque des revendications précédentes, **caractérisé en ce que** la plaque de rampe (4) est fabriquée à partir d'une platine en tôle monobloc et homogène ou **en ce que** la plaque de rampe (4) est fabriquée à partir d'une ébauche sur mesure.

5. Ensemble (1) de support de batterie selon l'une quelconque des revendications précédentes, **caractérisé en ce que** la plaque de rampe (4) présente une surface s'étendant inclinée par rapport à la direction longitudinale (X) du véhicule sur une grande partie de la largeur (9) du support de batterie (3), de préférence à un angle de 3 à 20 degrés.

6. Ensemble (1) de support de batterie selon l'une quelconque des revendications précédentes, **caractérisé en ce qu'**une surface de couplage (10) avant et/ou une surface de couplage (10) arrière sont orientées en s'étendant sensiblement parallèles par rapport à la direction longitudinale (X) du véhicule.

7. Ensemble (1) de support de batterie selon l'une quelconque des revendications précédentes, **caractérisé en ce qu'**au moins une moulure de renfort (11) est formée par sections longitudinales dans la plaque de rampe (4) en s'étendant dans la direction longitudinale (X) du véhicule.

8. Ensemble (1) de support de batterie selon l'une quelconque des revendications précédentes, **caractérisé en ce qu'**au moins un patch de renfort (13) est disposé, de préférence sur le côté opposé au support, en particulier est couplé.

9. Ensemble (1) de support de batterie selon l'une quelconque des revendications précédentes, **caractérisé en ce que** la plaque de rampe (4) s'étend dans la direction longitudinale (X) du véhicule jusqu'à au moins la moitié sous le support d'essieu avant (2).

10. Ensemble (1) de support de batterie selon l'une quelconque des revendications précédentes, **caractérisé en ce que** des distanceurs (17) sont disposés entre une face intérieure de la plaque de rampe (4) et le support d'essieu avant (2) et/ou le support de batterie (3).

11. Ensemble (1) de support de batterie selon l'une quelconque des revendications précédentes, **caractérisé en ce qu'**un élément tampon (20) est disposé devant le support de batterie (3) sur la face intérieure (14) de la plaque de rampe (4) dans la direction longitudinale (X) du véhicule.
